# EUROPEAN PATENT SPECIFICATION

(11) **EP 3 640 554 B1**
(45) Date of publication and mention of the grant of the patent: **20.04.2022**
(21) Application number: 18818936.9
(22) Date of filing: 24.05.2018
(51) Int. Cl.: F24F 3/153, B01D 53/26, F24F 3/14

(54) **HUMIDITY CONTROL UNIT**
FEUCHTIGKEITSREGELEINHEIT
UNITÉ DE RÉGLAGE D'HUMIDITÉ

(30) Priority: 14.06.2017 JP 2017116658
(43) Date of publication of application: 22.04.2020
(73) Proprietor: Daikin Industries, Ltd., Osaka-shi, Osaka 530-8323 (JP)
(72) Inventor: KIZAWA, Toshihiro, Osaka-shi Osaka 530-8323 (JP)
(74) Representative: Global IP Europe Patentanwaltskanzlei
(86) International application number: PCT/JP2018/019973
(87) International publication number: WO 2018/230295

(56) References cited:
- EP-A1- 2 351 970
- EP-A1- 2 623 179
- JP-A- 2007 029 864
- JP-A- 2011 190 937
- JP-A- 2013 228 182

## Description

### TECHNICAL FIELD

The present disclosure relates to a humidity control unit, and particularly to a humidity control unit that heats, using a heat exchanger, air to be sent to an adsorption rotor.

### BACKGROUND ART

Conventionally, there has been a humidity control unit that adsorbs moisture in air into an adsorption rotor and flows heated air through the adsorption rotor so that the adsorbed moisture is desorbed from the adsorption rotor and performs humidification. Among such humidity control units, there is one that heats, using a heat exchanger, the air to be flowed through the adsorption rotor, as described in Patent Literature 1 (JP 2007-327712 A), for example.

EP 2 351 970 A1 discloses a humidity control unit comprising: a casing that includes an air inlet (54) that takes in air, an air outlet (55) that takes out the air, a first desorption area, and a second desorption area, and is configured such that the air taken in from the air inlet passes through the first desorption area and the second desorption area in order and taken out from the air outlet; an adsorber that includes an adsorbent capable of adsorbing moisture in the air and desorbing moisture to the air that has a higher temperature than a temperature of the air when moisture is adsorbed, and is configured to be capable of moving a portion of the adsorbent that has adsorbed moisture in the air to the first desorption area and the second desorption area, and an adsorption rotor that includes the adsorbent, and is configured to be capable of moving the portion of the adsorbent that has adsorbed moisture in the air to the first desorption area and the second desorption area; and a heating apparatus that includes a first heating unit that heats the air before passing through the first desorption area, and a second heating unit that heats the air before passing through the second desorption area, wherein: the heating apparatus is a heat exchanger that is configured to exchange heat between a refrigerant supplied from a heat source unit and the air, and that includes, as the first heating unit, a first heat exchange unit that exchanges heat between the air before passing through the first desorption area and the refrigerant, and as the second heating unit, a second heat exchange unit that exchanges heat between the air after passing through the first heat exchange unit and the first desorption area and before passing through the second desorption area and the refrigerant; and the heat exchanger is configured such that the refrigerant flows from the first heat exchange unit to the second heat exchange unit.

### SUMMARY OF THE INVENTION

### <Technical Problem>

However, in the humidity control unit described in Patent Literature 1, the air supplied to the adsorption rotor for desorption of moisture is heated by the heat exchanger; therefore, compared to a case where the air is heated by an electric heater or the like, a large amount of heat cannot be easily given to the air that passes through the heat exchanger at once, and thus a temperature of the air after heat exchange cannot be easily raised. A humidity control unit having the configuration described above cannot easily supply sufficient moisture for humidification. Moreover, even when an electric heater is used, in a case where an amount of heat of the air blown out from the humidity control unit is limited, the humidity control unit cannot easily supply sufficient moisture for humidification.

An object of the present invention is to provide a humidity control unit capable of desorbing sufficient moisture from an adsorption rotor even if an amount of heat to be given to air is small and thus a temperature of the air cannot be easily raised when the air supplied to the adsorption rotor for desorption of moisture is heated.

### <Solution to Problem>

A humidity control unit according to the invention is as defined in the appended claim 1. The preferred embodiments are defined by the appended dependent claims.

In the humidity control unit according to the invention, the moisture desorbed from the adsorber in the second desorption area is added to the moisture desorbed from the adsorber in the first desorption area. As a result, the air taken out from the air outlet is sufficiently humidified with the moisture desorbed in the first desorption area and the moisture desorbed in the second desorption area.

Moreover, since moisture is desorbed in the first desorption area by the air heated in the first heat exchange unit, and then heat is exchanged with the air that has passed through the first heat exchange unit and the first desorption area in the second heat exchange unit, the air that passes through the second desorption area is heated twice, so that moisture can be desorbed also in the second desorption area, and thus the moisture can be sufficiently desorbed in the first desorption area and the second desorption area.

Preferably, the heat exchanger is configured such that the first heat exchange unit and the second heat exchange unit are disposed with the adsorption rotor interposed therebetween.

In the humidity control unit according to this preferred embodiment, since the first heat exchange unit and the second heat exchange unit are disposed with the adsorption rotor interposed therebetween, both of the first heat exchange unit and the second heat exchange unit can be installed to face the adsorption rotor 32.

Preferably, the heat exchanger is disposed in such a manner that an air flow that passes through the second desorption area after passing through the second heat exchange unit is opposed to an air flow that passes through the adsorption rotor for adsorption of moisture.

In the humidity control unit according to this preferred embodiment, since the air flow that passes through the second desorption area is opposed to the air flow that passes through the adsorption rotor for adsorption of moisture, moisture can be easily desorbed in the second desorption area.

According to the invention, the heat exchanger is configured such that the refrigerant flows from the first heat exchange unit to the second heat exchange unit.

Therefore, after moisture is desorbed by the air that has passed through the second heat exchange unit that cannot easily raise the temperature of the air after heat exchange due to a small amount of heat to be given to the air from the refrigerant, moisture can be desorbed by the air that has passed through the first heat exchange unit that has a large amount of heat and can easily raise the temperature of the air after heat exchange. Therefore, the moisture that has not been desorbed by the air that has passed through the second heat exchange unit can be desorbed by the air after passing through the first heat exchange unit.

Preferably, the heat exchanger is configured such that the refrigerant in a superheat range flows through at least a part of the first heat exchange unit, and the refrigerant in a gas-liquid two-phase area flows through the second heat exchange unit.

In the humidity control unit according to this preferred embodiment, since the refrigerant in the superheat range flows through at least a part of the first heat exchange unit, the temperature of the air that passes through the first heat exchange unit can be easily raised compared with the temperature of the air that has passed through the second heat exchange unit, and the moisture that has not been desorbed by the air after passing through the second heat exchange unit can be easily desorbed by the air after passing through the first heat exchange unit.

Preferably, the adsorption rotor includes a polymer adsorbent that has a function of performing adsorption and desorption, and the heat exchanger exchanges heat in the first heat exchange unit in such a manner that a temperature of the air after heat exchange is lower than 100°C.

In the humidity control unit according to this preferred embodiment, the adsorption rotor includes a polymer adsorbent, but through suppressing of the temperature of the air after heat exchange in the first heat exchange unit to lower than 100°C, deterioration of the polymer adsorbent can be suppressed, and thus lowering of an adsorbing function of the adsorption rotor can be suppressed.

Preferably, the adsorber has a first side close to the air outlet and a second side close to the air inlet, and the casing is configured such that the air that has entered from the air inlet passes through the adsorber from the second side to the first side, the air folded back after passing through the first side passes through the adsorber from the first side to the second side, the air folded back after passing through the second side passes through the adsorber from the second side to the first side, and the air that has passed through the first side exits from the air outlet.

In the humidity control unit according to this preferred embodiment, since the air flow from the air inlet to the air outlet is folded back twice and passes through the adsorber in such a manner as to form an S-shape, the air path around the adsorber can be easily made compact.

Preferably, the heating apparatus is configured such that the first heating unit and the second heating unit are disposed with the adsorber interposed therebetween, and the first heating unit, the first side, the second side, and the second heating unit are disposed in that order.

In the humidity control unit according to this preferred embodiment, since the first heating unit and the second heating unit are disposed with the adsorber interposed therebetween with respect to the air flow that passes through the adsorber in such a manner as to form an S-shape, the air path around the adsorber and the heating apparatus can be easily made compact.

Preferably, the heating apparatus is disposed in such a manner that the air flow that passes through the adsorbent in the second desorption area after passing through the second heating unit is opposed to the air flow that passes through the adsorbent for adsorption of moisture.

In the humidity control unit according to this preferred embodiment, since the air flow that passes through the second desorption area is opposed to the air flow that passes through the adsorber for adsorption of moisture, moisture can be easily desorbed in the second desorption area.

### <Advantageous Effects of Invention>

In the humidity control unit according to the invention, when the air supplied to the adsorber for desorption of moisture is heated, even if the amount of heat that can be given to the air is small and thus the temperature of the air cannot be easily raised, sufficient moisture can be desorbed from the adsorption rotor.

In the humidity control unit according to the invention, when the air supplied to the adsorption rotor for desorption of moisture is heated by the heat exchanger, even if the amount of heat that can be given at once to the air from the refrigerant is small, sufficient moisture can be desorbed from the adsorption rotor.

In the humidity control unit according to the invention, a structure can be simplified so as to suppress enlargement of the humidity control unit.

In the humidity control unit according to the invention, a humidification amount can be easily increased.

In the humidity control unit according to the invention, lifetime of the adsorption rotor can be extended.

In the humidity control unit according to the invention, the humidity control unit can be easily downsized.

### BRIEF DESCRIPTION OF THE DRAWINGS

FIG. 1 is a circuit diagram of an air conditioner including a humidifying unit according to an embodiment.
FIG. 2 is a conceptual diagram showing an example of a configuration of the humidifying unit in FIG. 1.
FIG. 3 is a front view of the humidifying unit according to the embodiment.
FIG. 4 is a cross-sectional view of the humidifying unit taken along line I-I in FIG. 3.
FIG. 5 is a schematic diagram of an air conditioner attached to a wall and including the humidifying unit shown in FIG. 1.
FIG. 6 is a conceptual diagram showing an air flow in an adsorption rotor and a regeneration heat exchanger.
FIG. 7 is a front view showing an example of disposition of the adsorption rotor, an adsorption fan, and a regeneration fan of the humidifying unit.
FIG. 8 is a Mollier diagram showing a state of a refrigerant in the regeneration heat exchanger.
FIG. 9 is a psychrometric chart showing a state of air that passes through the adsorption rotor and the regeneration heat exchanger.
FIG. 10 is a conceptual diagram showing a configuration of a humidity control unit.
FIG. 11 is a circuit diagram of an air conditioner including a dehumidifying unit according to Modification 1A.
FIG. 12 is a conceptual diagram showing an example of a configuration of the dehumidifying unit in FIG. 11.
FIG. 13 is a schematic diagram of an air conditioner attached to a wall and including the dehumidifying unit shown in FIG. 11.
FIG. 14 is a schematic diagram showing a configuration of a humidity control unit according to Modification 1B.

### DESCRIPTION OF EMBODIMENTS

Hereinafter, a humidity control unit according to an embodiment of the present invention will be described with reference to the drawings. In the embodiment, a humidifying unit incorporated in an air conditioner is described as an example of the humidity control unit.

### (1) Overall configuration

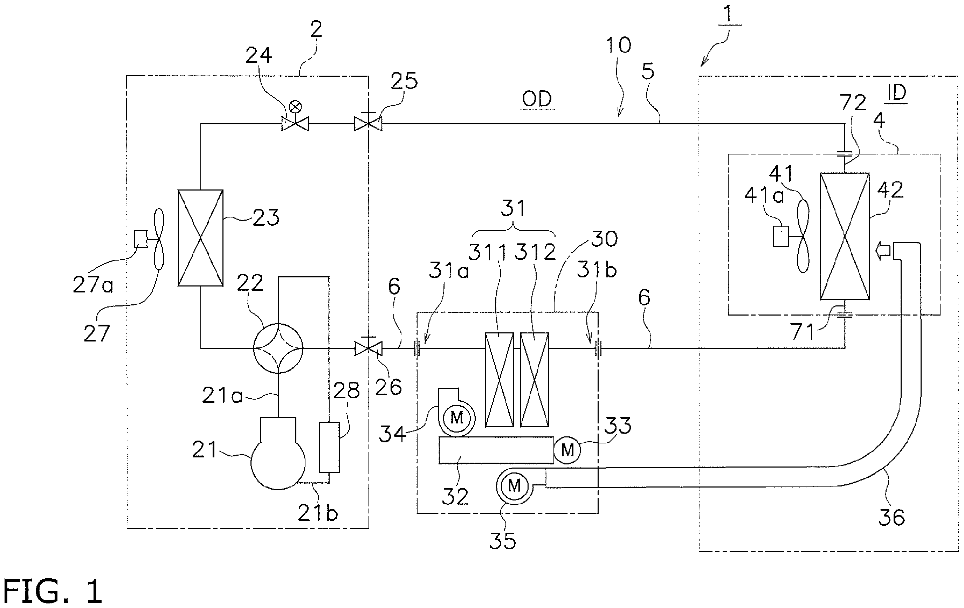

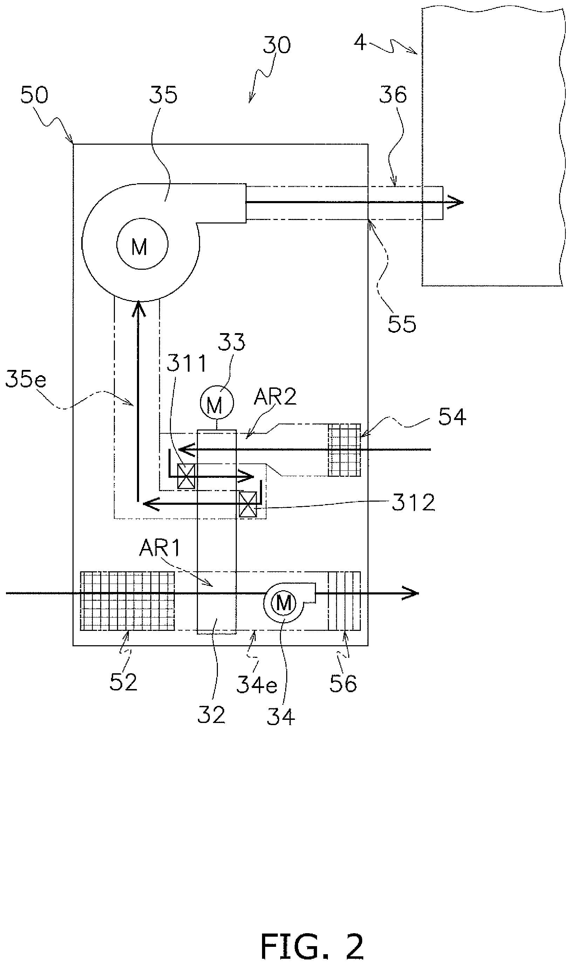

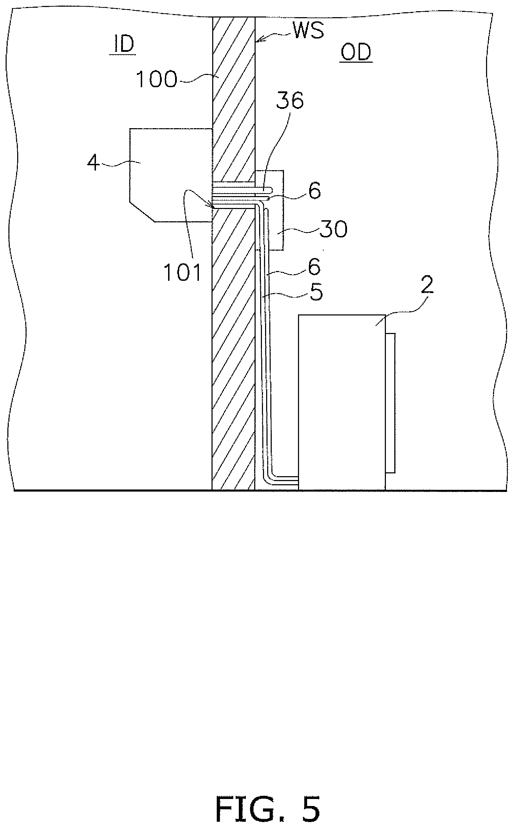

FIG. 1 shows an overall configuration of an air conditioner according to the embodiment. Further, FIG. 2 shows a concept of a configuration of a humidifying unit 30 shown in FIG. 1. An air conditioner 1 shown in FIG. 1 includes an outdoor unit 2, an indoor unit 4, and connection pipes 5 and 6, and the humidifying unit 30 is incorporated in the air conditioner 1. In the air conditioner 1 according to the embodiment, the outdoor unit 2 is installed in an outdoor space OD, the indoor unit 4 is attached to a wall 100 of an indoor space ID (see FIG. 5), and the outdoor unit 2 and the indoor unit 4 are connected through the connection pipes 5 and 6 or the like. The outdoor unit 2 includes a compressor 21, a four-way valve 22, an outdoor heat exchanger 23, an expansion valve 24, a shutoff valve 25, a shutoff valve 26, an outdoor fan 27, and an accumulator 28. The indoor unit 4 includes an indoor heat exchanger 42 and an indoor fan 41.

Through the connection between the outdoor unit 2 and the indoor unit 4 with the connection pipes 5 and 6, a refrigerant circuit 10 for performing a vapor compression refrigeration cycle is formed in the air conditioner 1. The compressor 21 is incorporated in the refrigerant circuit 10. The compressor 21 sucks a low-pressure gas refrigerant, compresses the low-pressure gas refrigerant into a high-temperature and high-pressure gas refrigerant, and then discharges the high-temperature and high-pressure gas refrigerant. The compressor 21 is, for example, a variable capacity inverter compressor capable of controlling a number of rotations with an inverter. As an operating frequency of the compressor 21 increases, an amount of the refrigerant circulating in the refrigerant circuit 10 increases. Conversely, as the operating frequency decreases, the amount of the refrigerant circulating in the refrigerant circuit 10 decreases.

The four-way valve 22 is a valve for switching a direction of a refrigerant flow at a time of switching between a cooling operation and a heating operation. In the four-way valve 22, a discharge side (discharge pipe 21a) of the compressor 21 is connected to a first port, the outdoor heat exchanger 23 is connected to a second port, the accumulator 28 is connected to a third port, and the connection pipe 6 is connected to a fourth port through the shutoff valve 26. The four-way valve 22 described above is capable of switching a state indicated by the broken lines in which the refrigerant flows simultaneously between the first and second ports and between the third and fourth ports, and a state indicated by the solid lines in which the refrigerant flows simultaneously between the first and fourth ports and between the second and third ports.

Although a detailed configuration of the humidifying unit 30 will be described later, the humidifying unit 30 includes a regeneration heat exchanger 31, and the regeneration heat exchanger 31 is connected to the connection pipe 6. Therefore, during the heating operation, the high-temperature and high-pressure gas refrigerant that is discharged from the compressor 21 is sent to the regeneration heat exchanger 31 while maintaining the high temperature and pressure. Since pre-regeneration air to be sent to an adsorption rotor 32 is heated by the regeneration heat exchanger 31, post-regeneration air with a high humidity can be generated. Therefore, the humidifying unit 30 mainly humidifies the indoor space ID during the heating operation.

In the outdoor heat exchanger 23 disposed between the second port of the four-way valve 22 and the expansion valve 24, heat is exchanged between the refrigerant that flows through a heat transfer tube (not shown) and outdoor air. The outdoor heat exchanger 23 functions as a radiator that releases heat from the refrigerant during the cooling operation, and functions as an evaporator that gives heat to the refrigerant during the heating operation.

The expansion valve 24 is disposed between the outdoor heat exchanger 23 and the indoor heat exchanger 42. The expansion valve 24 has a function of expanding and decompressing the refrigerant that flows between the outdoor heat exchanger 23 and the indoor heat exchanger 42. The expansion valve 24 is configured to be capable of changing an opening degree of the expansion valve. When the opening degree of the expansion valve is decreased, flow path resistance of the refrigerant that passes through the expansion valve 24 increases, and when the opening degree of the expansion valve is increased, the flow path resistance of the refrigerant that passes through the expansion valve 24 decreases. The expansion valve 24 described above expands and decompresses the refrigerant that flows from the indoor heat exchanger 42 toward the outdoor heat exchanger 23 during the heating operation, and expands and decompresses the refrigerant that flows from the outdoor heat exchanger 23 toward the indoor heat exchanger 42 during the cooling operation. For the expansion valve 24, for example, an electric valve that electrically opens and closes according to a control signal can be used.

In addition, the outdoor unit 2 is provided with the outdoor fan 27 that is configured to suck the outdoor air into the outdoor unit 2, supply the outdoor air to the outdoor heat exchanger 23, and then discharge the air after heat exchange to the outside of the outdoor unit 2. The outdoor fan 27 promotes a function of the outdoor heat exchanger 23 for cooling or evaporating the refrigerant using the outdoor air as a cooling source or a heating source. The outdoor fan 27 is driven by an outdoor fan motor 27a that can change the number of rotations. As the number of rotations of the outdoor fan 27 is changed, an air volume of the outdoor air that passes through the outdoor heat exchanger 23 is changed.

Further, the indoor unit 4 is provided with the indoor fan 41 that is configured to suck indoor air into the indoor unit 4, supply the indoor air to the indoor heat exchanger 42, and then discharge the air after heat exchange to the outside of the indoor unit 4. The indoor fan 41 promotes a function of the indoor heat exchanger 42 for cooling or evaporating the refrigerant using the indoor air as a cooling source or a heating source. The indoor fan 41 is driven by an indoor fan motor 41a that can change the number of rotations.

Note that when the humidifying unit 30 is installed, the shutoff valves 25 and 26 are closed. Then, when the installation of the humidifying unit 30 is finished, the shutoff valves 25 and 26 are opened.

### (2) Basic operation

The indoor space ID is humidified by the humidifying unit 30 mainly when the indoor space ID is dried, and there is no particular limitation on a time when the indoor space ID is humidified by the humidifying unit 30. For example, in Japan, an indoor space is often dried in winter, and thus the indoor space is often humidified by the humidifying unit 30 during the heating operation.

### (2-1) Heating operation

During the heating operation, in the refrigerant circuit 10, the four-way valve 22 is in the state indicated by the solid lines in FIG. 1. Further, the shutoff valves 25 and 26 are opened, and the opening degree of the expansion valve 24 is adjusted so as to decompress the refrigerant.

When the compressor 21 is driven in the refrigerant circuit 10 during the heating operation described above, the low-pressure gas refrigerant is sucked into the compressor 21 through a suction pipe 21b, compressed by the compressor 21, and discharged from the discharge side (discharge pipe 21a) of the compressor 21. The high-temperature and high-pressure gas refrigerant discharged from the compressor 21 is sent to the regeneration heat exchanger 31 through the first and fourth ports of the four-way valve 22, the shutoff valve 26, and the connection pipe 6. The refrigerant whose heat has been exchanged in the regeneration heat exchanger 31 enters the indoor heat exchanger 42 through the connection pipe 6 and a connecting pipe 71. The high-temperature and high-pressure gas refrigerant radiates heat through heat exchange with the indoor air blown out from the indoor fan 41 in the indoor heat exchanger 42. The high-pressure refrigerant after heat radiation is sent to the expansion valve 24 through a connecting pipe 72, the connection pipe 5, and the shutoff valve 25, and then decompressed by the expansion valve 24 to become a refrigerant in a low-pressure gas-liquid two-phase state. The refrigerant in the low-pressure gas-liquid two-phase state that has exited from the expansion valve 24 enters the outdoor heat exchanger 23. In the outdoor heat exchanger 23, the refrigerant in the low-pressure gas-liquid two-phase state evaporates through heat exchange with the outdoor air. The low-pressure gas refrigerant that has exited from the outdoor heat exchanger 23 passes through the second and third ports of the four-way valve 22 and the accumulator 28, and is again sent to a suction side (suction pipe 21b) of the compressor 21.

### (2-2) Cooling operation

During the cooling operation, in the refrigerant circuit 10, the four-way valve 22 is in the state indicated by the broken lines in FIG. 1. Further, the shutoff valves 25 and 26 are opened, and the opening degree of the expansion valve 24 is adjusted so as to decompress the refrigerant.

When the compressor 21 is driven in the refrigerant circuit 10 during the cooling operation described above, the low-pressure gas refrigerant is sucked into the compressor 21 through the suction pipe 21b, compressed by the compressor 21, and discharged from the discharge side (discharge pipe 21a) of the compressor 21. The high-temperature and high-pressure gas refrigerant discharged from the compressor 21 is sent to the outdoor heat exchanger 23 through the first and second ports of the four-way valve 22. The high-temperature and high-pressure gas refrigerant radiates heat through heat exchange with the outdoor air in the outdoor heat exchanger 23. The high-pressure refrigerant after heat radiation is sent to the expansion valve 24, and then decompressed by the expansion valve 24 to become a refrigerant in a low-pressure gas-liquid two-phase state. The refrigerant in the low-pressure gas-liquid two-phase state is sent to the indoor heat exchanger 42 through the shutoff valve 25, the connection pipe 5, and the connecting pipe 72. In the indoor heat exchanger 42, the refrigerant in the low-pressure gas-liquid two-phase state evaporates through heat exchange with the indoor air blown out from the indoor fan 41 to become a low-pressure gas refrigerant. The low-pressure gas refrigerant that has exited from the indoor heat exchanger 42 passes through the connecting pipe 71, the connection pipe 6 to which the regeneration heat exchanger 31 is connected, the shutoff valve 26, the four-way valve 22 (from the fourth port to the third port), and the accumulator 28, and is again sent to the suction side (suction pipe 21b) of the compressor 21.

### (3) Detailed configuration

### (3-1) Humidifying unit 30

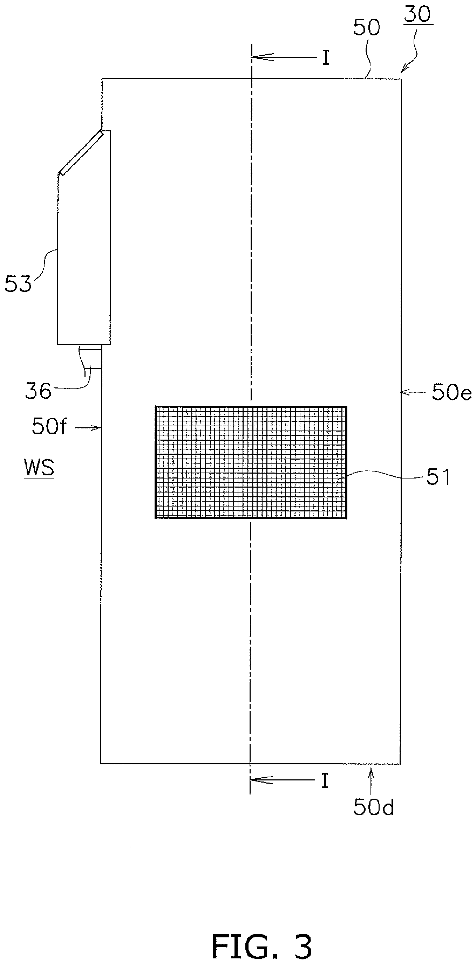

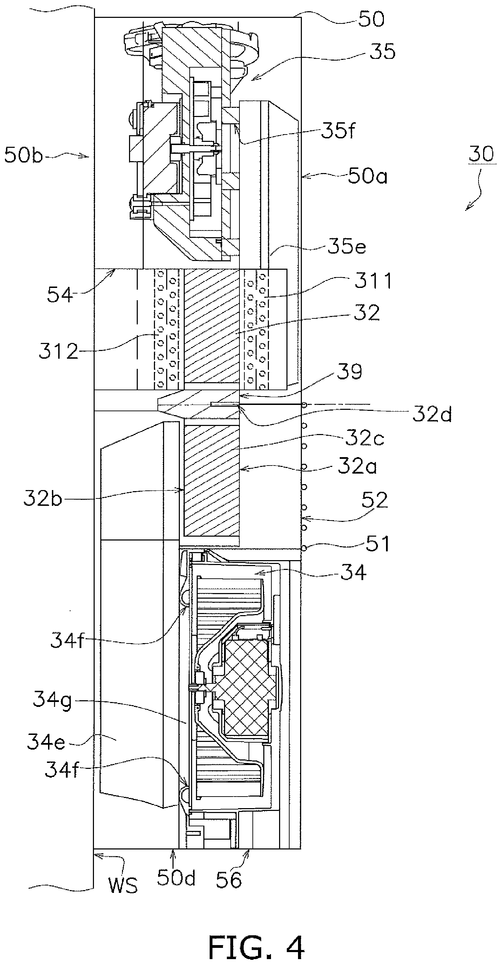

FIG. 3 shows an appearance of the humidifying unit 30 as viewed from the front. FIG. 4 shows a cross section of the humidifying unit 30 taken along line I-I in FIG. 3. Note that in cross-sectional views such as FIG. 4, hatching such as oblique lines is partially omitted for easy understanding of the drawing. As shown in FIG. 1, the humidifying unit 30 includes the regeneration heat exchanger 31, the adsorption rotor 32, a rotor motor 33, an adsorption fan 34, a regeneration fan 35, and a humidifying hose 36. The regeneration heat exchanger 31, the adsorption rotor 32, the rotor motor 33, the adsorption fan 34, and the regeneration fan 35 are accommodated in a casing 50 shown in FIG. 3.

In the humidifying unit 30, as shown in FIG. 2, pre-adsorption air is taken in from a pre-adsorption air inlet 52 and sent to a moisture adsorption area AR1 of the adsorption rotor 32. Post-adsorption air deprived of moisture in the moisture adsorption area AR1 of the adsorption rotor 32 is blown out from an adsorption fan blow-out port 56. Air flows of the pre-adsorption air and the post-adsorption air are generated by the adsorption fan 34. Further, the pre-regeneration air is taken in from a pre-regeneration air inlet 54, heated when passing through the regeneration heat exchanger 31, and sent to a moisture desorption area AR2 of the adsorption rotor 32. The post-regeneration air to which moisture has been given in the moisture desorption area AR2 of the adsorption rotor 32 is blown out from a post-regeneration air outlet 55 into the indoor unit 4 through a post-regeneration air duct 35e and the humidifying hose 36. Air flows of the pre-regeneration air and the post-regeneration air are generated by the regeneration fan 35.

### (3-1-1) Casing 50

As shown in FIGS. 3 and 4, a shape of the casing 50 of the humidifying unit 30 is designed based on a rectangular parallelepiped. The humidifying unit 30 shown in FIG. 5 is attached in contact with or close to a wall surface WS along a vertical direction so that a back 50b of the casing 50 faces the wall surface WS. A through hole 101 is formed in the wall 100 shown in FIG. 5. The connection pipes 5 and 6 and the humidifying hose 36 pass through the through hole 101. In the casing 50 shown in FIGS. 3 and 4, the regeneration fan 35, the adsorption rotor 32, and the adsorption fan 34 are disposed in that order from the top. On a front 50a of the casing 50, the semicircular pre-adsorption air inlet 52 is formed at a portion slightly below a center of the front 50a in accordance with a position of the disk-shaped adsorption rotor 32, and a grid 51 is attached to cover the pre-adsorption air inlet 52.

A pipe connection portion cover 53 is attached to a left side surface 50f of the casing 50. The pipe connection portion cover 53 covers pipe connection portions 31a and 31b (see FIG. 1). The pipe connection portion 31a is connected to the connection pipe 6 that is connected to the shutoff valve 26, and the pipe connection portion 31b is connected to the connection pipe 6 that is connected to the indoor heat exchanger 42 of the indoor unit 4. The left side surface 50f of the casing 50 includes the pre-regeneration air inlet 54 (see FIG. 2) and an opening for taking out the humidifying hose 36 from the inside of the casing 50 to the outside. In the humidifying unit 30 having the configuration described above, the pre-regeneration air inlet 54 may or may not be formed on a right side surface 50e. On a lower side surface 50d of the casing 50, the adsorption fan blow-out port 56 is provided.

### (3-1-2) Regeneration heat exchanger 31

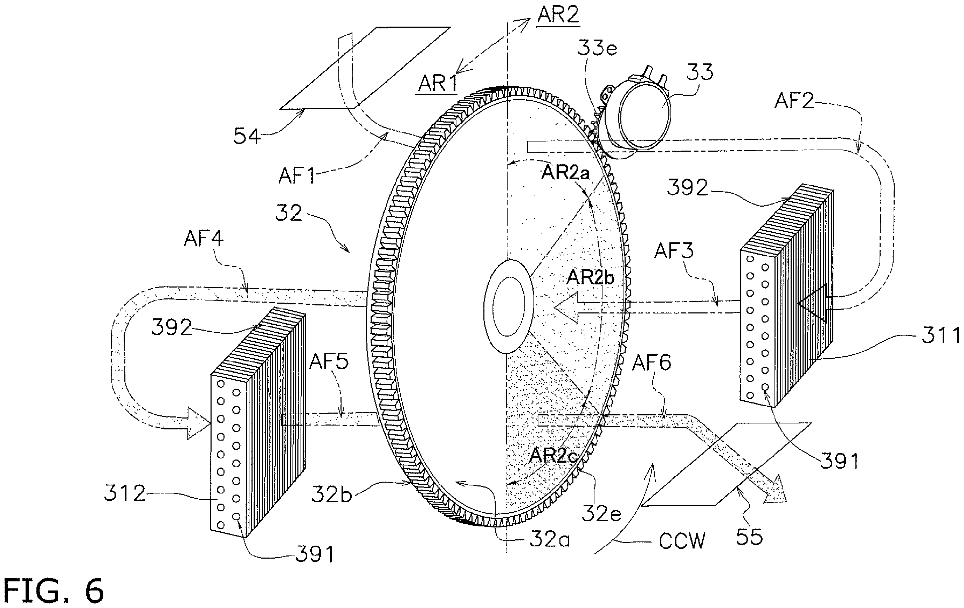

The regeneration heat exchanger 31 includes a first heat exchange unit 311 and a second heat exchange unit 312. In the first heat exchange unit 311 and the second heat exchange unit 312 of the regeneration heat exchanger 31, for example, as shown in FIG. 6, a fin-and-tube heat exchanger can be used in which a plurality of heat transfer tubes 391 penetrates through a plurality of heat transfer fins 392 in an alignment direction thereof. The first heat exchange unit 311 is located on an upstream side of a first desorption area AR2b, which will be described later, and disposed so as to face the adsorption rotor 32. Moreover, the second heat exchange unit 312 is located on an upstream side of a second desorption area AR2c, which will be described later, and disposed so as to face the adsorption rotor 32. The regeneration heat exchanger 31 is configured to exchange heat between the outdoor air and the refrigerant as a heat source.

### (3-1-3) Adsorption rotor unit 39

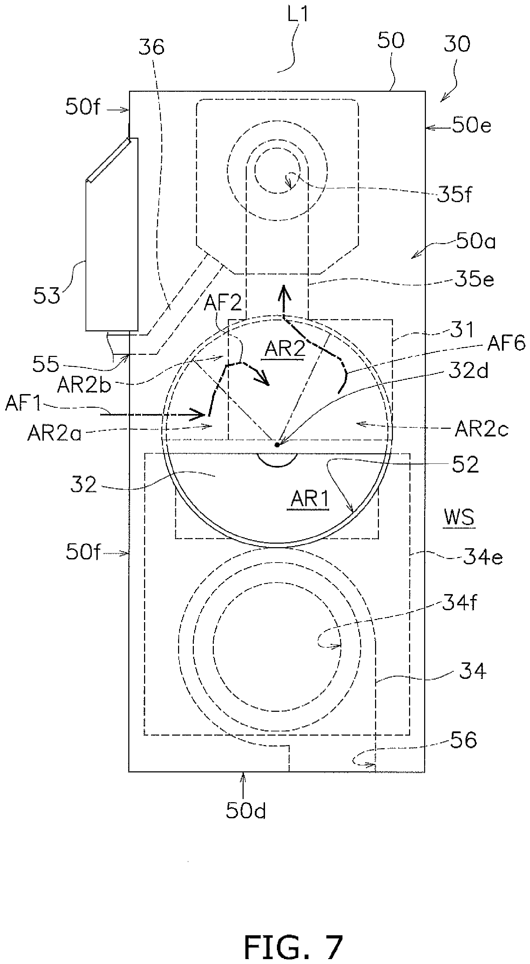

In FIG. 6, an air flow that passes through the adsorption rotor 32 is schematically drawn. Moreover, in FIG. 7, a disposition of the adsorption rotor 32, the adsorption fan 34, and the regeneration fan 35 in the casing 50 in a front view is indicated by broken lines. Furthermore, in FIG. 7, air flows that pass through the adsorption rotor 32 are drawn by arrows.

The adsorption rotor unit 39 (see FIG. 4) includes the regeneration heat exchanger 31, the adsorption rotor 32, and the rotor motor 33. The adsorption rotor 32 is a disk-shaped member. A large number of holes (not shown) that penetrate from a circular front surface 32a to a circular back surface 32b of the adsorption rotor 32 are formed in a rotor body 32c, and configured such that the air passes through the adsorption rotor 32 from the front surface 32a to the back surface 32b. The adsorption rotor 32 described above includes a polymer adsorbent. The adsorbent has a function of adsorbing moisture from the air that passes through the adsorption rotor 32, and a function of, when air heated to a temperature higher than normal temperature passes through the adsorption rotor 32, desorbing moisture into the heated air. The adsorbent described in the present disclosure desorbs adsorbed moisture into air that has a temperature higher than a temperature of the air when moisture is adsorbed.

In the disk-shaped area where the adsorption rotor 32 is disposed, an area where the air taken in from the pre-adsorption air inlet 52 passes through until being blown out from the adsorption fan blow-out port 56 is the moisture adsorption area AR1, an area where the air taken in from the pre-regeneration air inlet 54 passes through until being sent to the indoor unit 4 through the humidifying hose 36 is the moisture desorption area AR2. The moisture adsorption area AR1 and moisture desorption area AR2 are disposed so as not to overlap. In the humidifying unit 30 of the embodiment, the moisture adsorption area AR1 occupies substantially a lower half of the disk-shaped area, and the moisture desorption area AR2 occupies substantially an upper half of the disk-shaped area. Note that an occupation ratio of the moisture adsorption area AR1 and the moisture desorption area AR2 can be designed as appropriate. For example, the moisture desorption area AR2 may be fan-shaped and the remaining part may be the moisture adsorption area AR1. As shown in FIGS. 6 and 7, the moisture desorption area AR2 is divided into three fan-shaped areas, which are, in order from a side closer to the left side surface 50f, a purge area AR2a, the first desorption area AR2b, and the second desorption area AR2c.

The adsorption rotor unit 39 supports the adsorption rotor 32 so that the adsorption rotor 32 rotates around a first rotation shaft 32d. A gear 32e is formed on an outer periphery of the adsorption rotor 32, and the gear 32e is driven by a gear 33e of the rotor motor 33. The first rotation shaft 32d extends in a direction perpendicular to the back 50b. For example, the adsorption rotor 32 rotates 30 times per hour. When the adsorption rotor 32 makes one rotation around the first rotation shaft 32d, the adsorption rotor 32 passes through the moisture adsorption area AR1 and the moisture desorption area AR2, and adsorbs and desorbs moisture. Therefore, the adsorption rotor unit 39 holds the regeneration heat exchanger 31 and also forms an air path that passes through the regeneration heat exchanger 31 and further passes through the moisture desorption area AR2, so that all the pre-regeneration air heated through the regeneration heat exchanger 31 can pass through the adsorption rotor 32. In other words, an S-shaped air path is provided in the casing 50, the air path continuing as follows: an air flow AF1 that reaches the back surface 32b of the adsorption rotor 32 from the pre-regeneration air inlet 54 and enters from the back surface 32b, an air flow AF2 that exits from the front surface 32a of the adsorption rotor 32 and turns back, an air flow AF3 that enters the adsorption rotor 32 from the front surface 32a of the adsorption rotor 32 again, an air flow AF4 that exits from the back surface 32b of the adsorption rotor 32 and turns back, an air flow AF5 that enters the adsorption rotor 32 from the back surface 32b of the adsorption rotor 32 again, and an air flow AF6 that exits from the front surface 32a of the adsorption rotor 32 and is taken out from the post-regeneration air outlet 55.

The adsorption rotor 32 rotates counterclockwise (CCW) indicated by an arrow in FIG. 6 when viewed from the front. As the adsorption rotor 32 rotates, the portion of the adsorption rotor 32 that has passed through the moisture adsorption area AR1 first reaches the second desorption area AR2c. In the second desorption area AR2c, the post-regeneration air heated by the second heat exchange unit 312 passes through the adsorption rotor 32. At this time, a part of the moisture adsorbed in the adsorption rotor 32 is desorbed, but some moisture is not desorbed and remains in the adsorption rotor 32. The portion of the adsorption rotor 32 that has passed through the second desorption area AR2c then reaches the first desorption area AR2b as the adsorption rotor 32 rotates. In the first desorption area AR2b, the pre-regeneration air heated by the first heat exchange unit 311 passes through the adsorption rotor 32. At this time, much of the moisture that has not been desorbed in the second desorption area AR2c and remains in the adsorption rotor 32 is desorbed. The portion of the adsorption rotor 32 that has passed through the first desorption area AR2b then reaches the purge area AR2a as the adsorption rotor 32 rotates. In the purge area AR2a, the adsorption rotor 32 heated in the first desorption area AR2b is cooled by the pre-regeneration air. The portion of the adsorption rotor 32 that has passed through the first desorption area AR2b then reaches the moisture adsorption area AR1 as the adsorption rotor 32 rotates.

### (3-1-4) Adsorption fan 34

Here, an example in which a sirocco fan is used for the adsorption fan 34 is shown, but a fan that can be used for the adsorption fan 34 is not limited to a sirocco fan. However, the adsorption fan 34 is preferably a centrifugal fan that easily satisfies conditions of occupied volume and airflow volume. The adsorption fan 34 includes a post-adsorption air duct 34e. The adsorption fan 34 takes in the pre-adsorption air from the pre-adsorption air inlet 52, and blows the pre-adsorption air so that the pre-adsorption air passes through the adsorption rotor 32 in the moisture adsorption area AR1. The air that has passed through the adsorption rotor 32 is deprived of moisture by the adsorption rotor 32 and becomes post-adsorption air.

The post-adsorption air duct 34e is disposed on a side of the back surface 32b of the adsorption rotor 32. The post-adsorption air duct 34e is disposed so as to cover the moisture adsorption area AR1 and a suction circular hole 34f of a bell mouth 34g of the adsorption fan 34 in a front view. The post-adsorption air sucked into the adsorption fan 34 from the post-adsorption air duct 34e through the suction circular hole 34f of the bell mouth 34g of the adsorption fan 34 is blown out from the adsorption fan blow-out port 56.

### (3-1-5) Regeneration fan 35

Here, an example in which a turbo fan is used for the regeneration fan 35 is shown, but a fan that can be used for the regeneration fan 35 is not limited to a turbo fan. However, the regeneration fan 35 is preferably a centrifugal fan that easily satisfies conditions of occupied volume and airflow volume. The regeneration fan 35 is provided with the post-regeneration air duct 35e. The regeneration fan 35 takes in the pre-regeneration air from the pre-regeneration air inlet 54, and blows the pre-regeneration air so that the pre-regeneration air passes through the adsorption rotor 32 in the moisture desorption area AR2 Moisture is given to the air that has passed through the adsorption rotor 32 by the adsorption rotor 32, and the air becomes post-regeneration air. The pre-regeneration air is heated by the regeneration heat exchanger 31 before passing through the adsorption rotor 32.

The post-regeneration air duct 35e is disposed on a side of the front surface 32a of the adsorption rotor 32. The post-regeneration air duct 35e is disposed so as to cover the moisture desorption area AR2 and a suction port 35f of the regeneration fan 35 in a front view. The post-regeneration air sucked into the regeneration fan 35 from the post-regeneration air duct 35e through the suction port 35f of the regeneration fan 35 is blown into the indoor unit 4 through the humidifying hose 36.

More specifically, the air flow AF1 shown in FIGS. 6 and 7 indicates a flow of the pre-regeneration air that has been taken in from the pre-regeneration air inlet 54, to the back surface 32b of the adsorption rotor 32 that is located in the purge area AR2a. The air flow AF2 indicates a flow of the pre-regeneration air that has passed through the purge area AR2a from the front surface 32a to the first heat exchange unit 311. The air flow AF3 indicates a flow of the pre-regeneration air that has passed through the first heat exchange unit 311 from the first heat exchange unit 311 to the front surface 32a of the adsorption rotor 32 in the first desorption area AR2b. The air flow AF4 indicates a flow of the post-regeneration air that has passed through the first desorption area AR2b from the back surface 32b of the adsorption rotor 32 to the second heat exchange unit 312. The air flow AF5 indicates a flow of the post-regeneration air that has passed through the second heat exchange unit 312 from the second heat exchange unit 312 to the back surface 32b of the adsorption rotor 32. The air flow AF6 indicates a flow of the post-regeneration air that has passed through the second desorption area AR2c from the front surface 32a of the adsorption rotor 32. The air flow AF6 is taken out from the post-regeneration air outlet 55 of the casing 50.

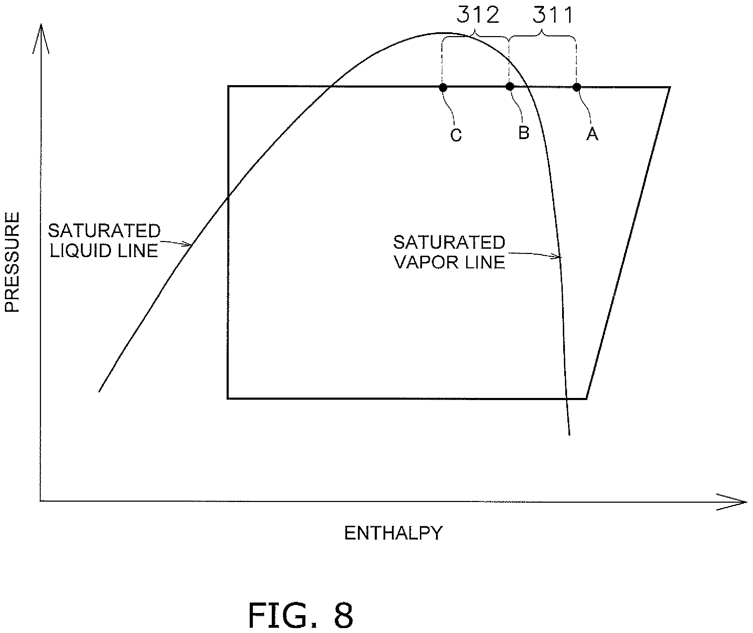

As shown in FIG. 1, the refrigerant discharged from the compressor 21 is supplied to the first heat exchange unit 311, and the refrigerant that has passed through the first heat exchange unit 311 is supplied to the second heat exchange unit 312. The Mollier diagram of FIG. 8 shows an outline of the vapor compression refrigeration cycle of the refrigerant circuit 10. In FIG. 8, point A corresponds to a state of the refrigerant at the inlet of the first heat exchange unit 311. Point B corresponds to a state of the refrigerant at the outlet of the first heat exchange unit 311, in other words, a state of the refrigerant at the inlet of the second heat exchange unit 312. Point C corresponds to a state of the refrigerant at the outlet of the second heat exchange unit 312. The refrigerant at the inlet of the first heat exchange unit 311 is a high-temperature and high-pressure gas refrigerant, and the refrigerant at the inlet and outlet of the second heat exchange unit 312 is in a gas-liquid two-phase state. As described above, since the refrigerant that flows through the second heat exchange unit 312 does not enter a subcooled state, the refrigerant whose heat is to be exchanged can maintain a high temperature. For example, when the temperature of the outdoor air (air flow AF1) is 5°C to 10°C, the regeneration heat exchanger 31 can raise the temperature of the pre-regeneration air (air flow AF3) that has passed through the first heat exchange unit 311 to about 60°C, and when the temperature of the post-regeneration air (air flow AF4) that has passed through the adsorption rotor 32 located in the first desorption area AR2b is about 30°C, the regeneration heat exchanger 31 can raise the temperature of the post-regeneration air (air flow AF5) that has passed through the second heat exchange unit 312 to about 50°C.

In the humidifying unit 30, the first heat exchange unit 311 and the second heat exchange unit 312 are disposed so that the air flow (see the air flows AF5 and AF6) that passes through the adsorption rotor 32 in the second desorption area AR2c after passing through the second heat exchange unit 312 is opposed to the air flow that passes through the adsorption rotor 32 for adsorption of moisture. That is, in the moisture adsorption area AR1, the air flow passes through the adsorption rotor 32 from the front 50a to the back 50b of the casing 50, whereas in the second desorption area AR2c, the air flow conversely passes through the adsorption rotor 32 from the back 50b to the front 50a of the casing 50.

### (3-1-6) Desorption of moisture in moisture desorption area AR2

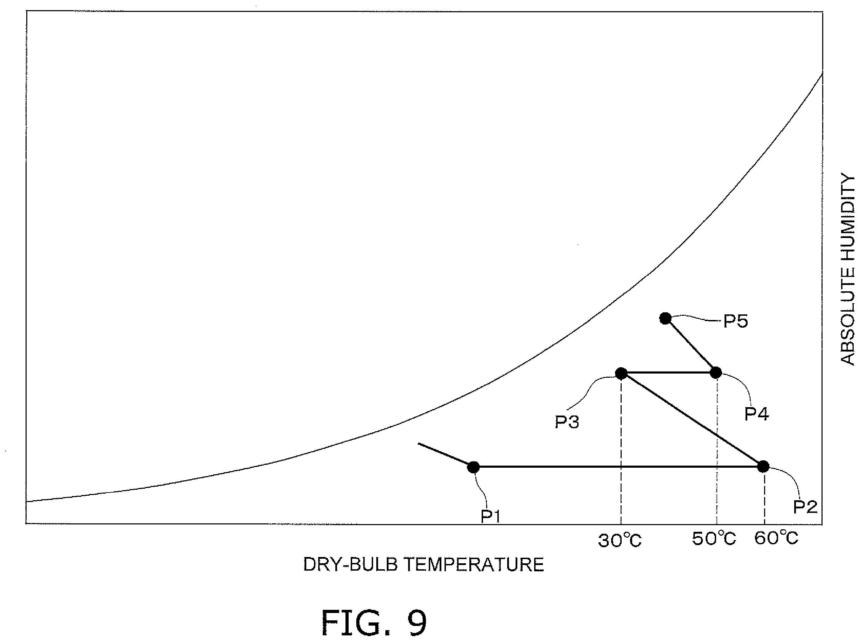

Desorption of moisture in the humidifying unit 30 will be described with reference to the psychrometric chart shown in FIG. 9. In FIG. 9, point P1 corresponds to the air that has passed through the adsorption rotor 32 in the purge area AR2a. Point P2 corresponds to the air that has passed through the first heat exchange unit 311. Point P3 corresponds to the air that has passed through the adsorption rotor 32 in the first desorption area AR2b. Point P4 corresponds to the air that has passed through the second heat exchange unit 312. Point P5 corresponds to the air that has passed through the adsorption rotor 32 in the second desorption area AR2c.

When the air taken in from the pre-regeneration air inlet 54 passes through the adsorption rotor 32 in the purge area AR2a, a small amount of moisture is adsorbed by the adsorption rotor 32, and the adsorption rotor 32 is cooled. Therefore, the air at point P1 is in a state where, compared with the air taken in from the pre-regeneration air inlet 54, the temperature has slightly increased and the absolute humidity has slightly decreased (state of the air flow AF2 in FIG. 6). Next, the air at point P2 that has passed through the first heat exchange unit 311 is in a state where, compared with the air at point P1, the absolute humidity has not changed and only the temperature has increased to, for example, 60°C (state of the air flow AF3 in FIG. 6).

Then, the air at point P3 to which moisture has been given from the adsorption rotor 32 and which has been cooled at the same time by the adsorption rotor 32 by passing through the adsorption rotor 32 in the first desorption area AR2b is in a state where, compared with the air at point P2, the absolute humidity has increased and the temperature has decreased to, for example, 30°C (state of the air flow AF4 in FIG. 6). Next, the air at point P4 that has passed through the second heat exchange unit 312 is in a state where, compared with the air at point P3, the absolute humidity has not changed and only the temperature has increased to, for example, 50°C (state of air flow AF5 in FIG. 6). The air at point P5 to which moisture has been given from the adsorption rotor 32 and which has been cooled by the adsorption rotor 32 at the same time by passing through the adsorption rotor 32 in the second desorption area AR2c is in a state where, compared with the air at point P4, the absolute humidity has increased and the temperature has decreased (state of the air flow AF5 in FIG. 6).

As described above, the air that has passed through the moisture desorption area AR2 is humidified at a stage of transition from the air state at point P2 to the air state at point P3, and further humidified at a stage of transition from the air state at point P4 to the air state at point P5, thereby being humidified twice in total. Therefore, the humidifying unit 30 can desorb sufficient moisture from the adsorption rotor 32 even when an amount of heat to be given from the refrigerant to the air in the regeneration heat exchanger 31 at once is small and thus the temperature of the air after one heat exchange with the refrigerant cannot be easily raised.

Further, in the humidifying unit 30, the adsorption rotor 32 includes a polymer adsorbent that has a function of performing adsorption and desorption. Therefore, the temperature of the air after heat exchange in the first heat exchange unit 311 is preferably set to be lower than 100°C. The description using FIG. 9 shows an example in which the temperature of the air after heat exchange in the first heat exchange unit 311 is suppressed to about 60°C. Heat resistance of the polymer adsorbent included in the adsorption rotor 32 is inferior to that of an adsorbent containing ceramic using zeolite or the like. However, through suppressing of the temperature of the air after heat exchange in the first heat exchange unit 311 to lower than 100°C, deterioration of the polymer adsorbent is suppressed, and thus lowering of an adsorbing function of the adsorption rotor 32 can be suppressed.

### (4) Features

### (4-1)

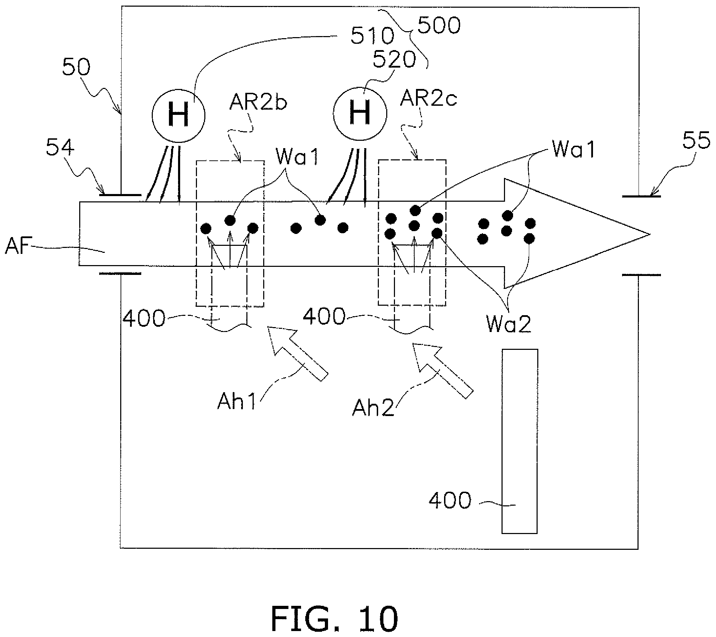

The humidifying unit 30, which is an example of the humidity control unit of the embodiment, is considered to include the configuration conceptually shown in FIG. 10. That is, the humidifying unit 30 includes the casing 50, an adsorber 400, and a heating apparatus 500. The casing 50 includes the pre-regeneration air inlet 54 that is an air inlet for taking in the air, the post-regeneration air outlet 55 that is an air outlet for taking out the air, the first desorption area AR2b, and the second desorption area AR2c. The casing 50 is configured such that the air taken in from the pre-regeneration air inlet 54 passes through the first desorption area AR2b and the second desorption area AR2c in order, and then taken out from the post-regeneration air outlet 55. In FIG. 10, a thick arrow AF indicates the air flow.

The adsorber 400 includes an adsorbent capable of adsorbing moisture in the air and at the same time desorbing moisture to the air that has a higher temperature than a temperature of the air when moisture is adsorbed. Examples of the adsorbent include a polymer adsorbent and a ceramic adsorbent. An example of the ceramic adsorbent is zeolite. The adsorption rotor 32 is an example of the adsorber 400.

The adsorber (400) is configured to be capable of relatively moving a portion of the adsorbent that has adsorbed moisture in the air to the first desorption area AR2b and the second desorption area AR2c. In FIG. 10, an arrow Ah1 indicates that the portion of the adsorbent of the adsorber 400 that has adsorbed moisture is moved to the first desorption area AR2b. Further, an arrow Ah2 indicates that the portion of the adsorbent of the adsorber 400 that has adsorbed moisture is moved to the second desorption area AR2c. The heating apparatus 500 includes a first heating unit 510 that heats the air before passing through the first desorption area AR2b, and a second heating unit 520 that heats the air before passing through the second desorption area AR2c. The first heating unit 510 is, for example, the first heat exchange unit 311 of the regeneration heat exchanger 31, but an electric heater may be used instead of the first heat exchange unit 311 of the regeneration heat exchanger 31. Further, the second heating unit 520 is, for example, the second heat exchange unit 312 of the regeneration heat exchanger 31, but an electric heater may be used instead of the second heat exchange unit 312 of the regeneration heat exchanger 31.

In FIG. 10, black circles Wa1 indicate moisture desorbed from the adsorber 400 in the first desorption area AR2b, and black circles Wa2 indicate moisture desorbed from the adsorber 400 in the second desorption area AR2c. In the second desorption area AR2c, the black circles Wa1 and Wa2 are mixed, indicating that the moisture desorbed in the second desorption area AR2c is added to the moisture desorbed in the first desorption area AR2b. As a result, the air taken out from the post-regeneration air outlet 55 is sufficiently humidified with the moisture desorbed in the first desorption area AR2b and the moisture desorbed in the second desorption area AR2c. Through desorption of moisture in the first desorption area AR2b, a temperature of the downstream air of the first desorption area AR2b in the air flow indicated by the arrow AF decreases. However, the temperature of the downstream air of the first desorption area AR2b is usually higher than the temperature of the air at the pre-regeneration air inlet 54, and thus only a small amount of energy is consumed for heating the air by the second heating unit 520. As described above, energy consumption can be suppressed through use of the air that has been used for desorption of moisture in the first desorption area AR2b further for desorption of moisture in the second desorption area AR2c.

### (4-2)

The humidifying unit 30 of the embodiment is an example of a humidity control unit. In the humidifying unit 30, the adsorption rotor 32 that is rotated by the rotor motor 33 is an adsorber. The adsorption rotor 32 moves the portion that has adsorbed moisture in the air in the moisture adsorption area AR1 to the moisture desorption area AR2. The adsorption rotor 32 desorbs the adsorbed moisture to the heated air that flows through the moisture desorption area AR2 For this purpose, the regeneration heat exchanger 31 that serves as a heating apparatus heats the air before passing through the moisture desorption area AR2 by exchanging heat between the refrigerant supplied from the outdoor unit 2 that serves as a heat source unit, and the air. As described with reference to FIG. 6, the adsorption rotor 32 is configured to be capable of desorbing moisture to the air that passes through the first desorption area AR2b and the second desorption area AR2c that are different from each other in the moisture desorption area AR2. The first heat exchange unit 311 included in the regeneration heat exchanger 31 is the first heating unit, and exchanges heat between the air before passing through the first desorption area AR2b, and the refrigerant. Moreover, the second heat exchange unit 312 included in the regeneration heat exchanger 31 is the second heating unit, and exchanges heat between the air after passing through the first heat exchange unit 311 and the first desorption area AR2b and before passing through the second desorption area AR2c, and the refrigerant.

In the humidifying unit 30 having the configuration described above, moisture is desorbed in the first desorption area AR2b by the air heated by the first heat exchange unit 311. Further, in the second heat exchange unit 312, heat of the air after passing through the first heat exchange unit 311 and the first desorption area AR2b is exchanged. As a result, as described with reference to FIG. 9, since the air that passes through the second desorption area AR2c is heated twice by the regeneration heat exchanger 31, moisture can also be desorbed in the second desorption area AR2c, and thus the humidifying unit 30 can desorb sufficient moisture from the adsorption rotor 32 in the first desorption area AR2b and the second desorption area AR2c.

### (4-3)

In the humidifying unit 30 described above, the first heat exchange unit 311 and the second heat exchange unit 312 are disposed with the adsorption rotor 32 interposed therebetween. The humidifying unit 30 is configured to bend the air flow so that the air that has passed through the first heat exchange unit 311 and the first desorption area AR2b further passes through the second heat exchange unit 312, and the first heat exchange unit 311 and the second heat exchange unit 312 are disposed so as to face the adsorption rotor 32. As a result, a structure of the humidifying unit 30 is simplified and the humidifying unit 30 is prevented from being enlarged.

### (4-4)

In the humidifying unit 30 described above, the air flow that passes through the second desorption area AR2c of the moisture desorption area AR2 is opposed to the air flow that passes through the adsorption rotor 32 for adsorption of moisture in the moisture adsorption area AR1. As a result, moisture can be easily desorbed in the second desorption area AR2c, and thus a humidification amount can be easily increased.

### (4-5)

As shown in FIG. 1, the refrigerant flows from the first heat exchange unit 311 to the second heat exchange unit 312, and as shown in FIG. 6, the first heat exchange unit 311 is disposed on a rear side in a rotation direction (CCW) of the adsorption rotor 32 with respect to the second heat exchange unit 312. Since the humidifying unit 30 is configured as described above, the refrigerant flows from the first heat exchange unit 311 to the second heat exchange unit 312. Therefore, after moisture is desorbed by the air that has passed through the second heat exchange unit 312 that cannot easily raise the temperature of the air after heat exchange due to a small amount of heat to be given to the air from the refrigerant, moisture can be desorbed by the air that has passed through the first heat exchange unit 311 that has a large amount of heat and can easily raise the temperature of the air after heat exchange. As a result, the humidifying unit 30 can desorb moisture that has not been desorbed by the air after passing through the second heat exchange unit 312, by the air after passing through the first heat exchange unit 311 that has a higher temperature than the temperature of the air after passing through the second heat exchange unit 312. As a result, the humidification amount can be increased as described with reference to FIG. 9.

### (4-6)

As described with reference to FIG. 8, since the refrigerant in the superheat range indicated by point A flows in from the inlet of the first heat exchange unit 311, the refrigerant in the superheat range flows through at least a part close to the inlet of the first heat exchange unit 311. Moreover, the refrigerant in the gas-liquid two-phase area indicated by point B flows in from the inlet of the second heat exchange unit 312, and the refrigerant in the gas-liquid two-phase area indicated by point C also flows out from the outlet. Therefore, the refrigerant in the gas-liquid two-phase area flows through the entire second heat exchange unit 312. In the humidifying unit 30 configured as described above, the temperature of the air that passes through the first heat exchange unit 311 can be easily raised compared with the temperature of the air that has passed through the second heat exchange unit 312, and moisture that has not been desorbed by the air after passing through the second heat exchange unit 312 can be easily desorbed by the air after passing through the first heat exchange unit.

### (4-7)

Since the adsorption rotor 32 of the humidifying unit 30 described above includes a polymer adsorbent, a configuration is provided so as to exchange heat in the first heat exchange unit 311 so that the temperature of the air after heat exchange is lower than 100°C. Through suppressing of the temperature of the air after heat exchange in the first heat exchange unit 311 to lower than 100°C, deterioration of the polymer adsorbent can be suppressed, and thus lowering of the adsorbing function of the adsorption rotor 32 can be suppressed. As a result, lifetime of the adsorption rotor 32 can be extended.

### (4-8)

As shown in FIG. 6, the adsorption rotor 32 that serves as an adsorber includes a front surface 32a that is first side close to the post-regeneration air outlet 55 that serves as an air outlet, and a back surface 32b that is the second side close to the pre-regeneration air inlet 54 that serves as an air inlet. The casing 50 is configured such that the air that has entered from the pre-regeneration air inlet 54 passes through the adsorption rotor 32 from the back surface 32b to the front surface 32a, the air that has been folded back after passing through the front surface 32a passes through the adsorption rotor 32 from the front surface 32a to the back surface 32b, the air that has been folded back after passing through the back surface 32b passes through the adsorption rotor 32 from the back surface 32b to the front surface 32a, and the air that has passes through the front surface 32a exits from the post-regeneration air outlet 55. In the humidifying unit 30 (an example of the humidity control unit) having the configuration described above, the air flow from the pre-regeneration air inlet 54 to the post-regeneration air outlet 55 is folded back twice (being folded back from the air flow AF2 to the air flow AF3, and from the air flow AF4 to the air flow AF5), and passes through the adsorption rotor 32 in such a manner as to form an S-shape. As a result, an air path around the adsorption rotor 32 can be easily made compact.

### (4-9)

As shown in FIG. 6, the first heat exchange unit 311 that serves as the first heating unit and the second heat exchange unit 312 that serves as the second heating unit are disposed on both sides of the adsorption rotor 32 with the adsorber interposed therebetween. Moreover, the first heat exchange unit 311, the front surface 32a of the adsorption rotor 32 that serves as the first side, the back surface 32b of the adsorption rotor 32 that serves as the second side, and the second heat exchange unit 312 are disposed in that order. In the humidifying unit 30 (an example of the humidity control unit) disposed in the manner described above, since the first heat exchange unit 311 and the second heat exchange unit 312 are disposed with the adsorption rotor 32 interposed therebetween with respect to the flow of the air that passes through the adsorption rotor 32 in such a manner as to form an S-shape, the air path around the adsorption rotor 32 and the regeneration heat exchanger 31 that serves as a heating apparatus can be easily made compact.

### (4-10)

In the humidifying unit 30, which is the humidity control unit described above, the air flow that passes through the adsorbent of the adsorption rotor 32 in the second desorption area AR2c is opposed to the air flow that passes through the adsorbent of the adsorption rotor 32 for adsorption of moisture in the moisture adsorption area AR1. As a result, moisture can be easily desorbed in the second desorption area AR2c, and thus the humidification amount can be easily increased. Note that the air flows that are opposed to each other are, for example, the air flows AF5 and AF6 in FIG. 6 and the air flow that passes through the adsorption rotor 32 from the front surface 32a to the back surface 32b in the moisture adsorption area AR1.

### (5) Modification

### (5-1) Modification 1A

The humidifying unit 30 of the above embodiment has been described as an example of the humidity control unit that is incorporated in the air conditioner 1 and humidifies the indoor space ID. Through installation of the same unit as the humidifying unit 30 in the indoor space ID and discharge of post-regeneration air to the outside, the unit can also be used as a dehumidifying unit.

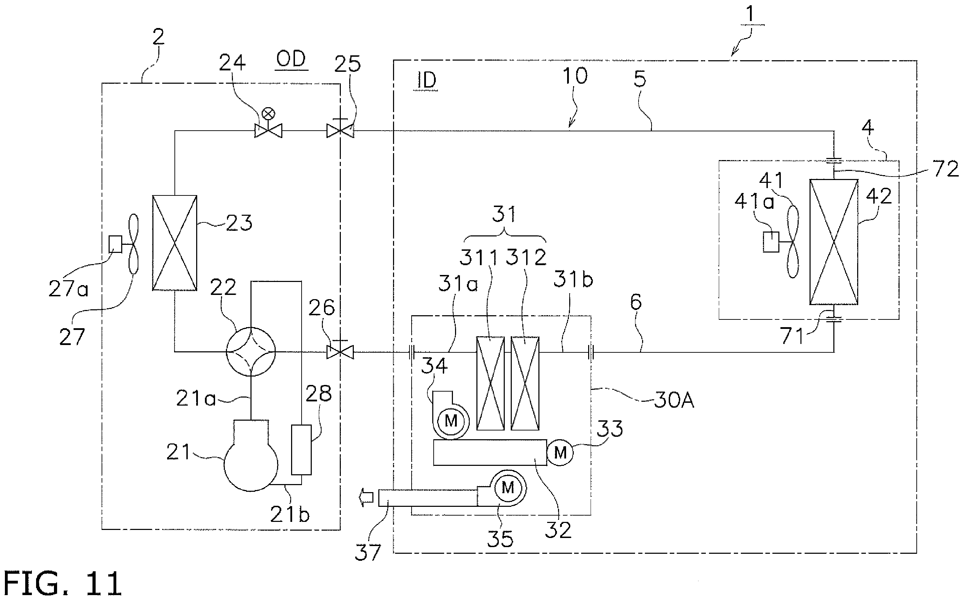

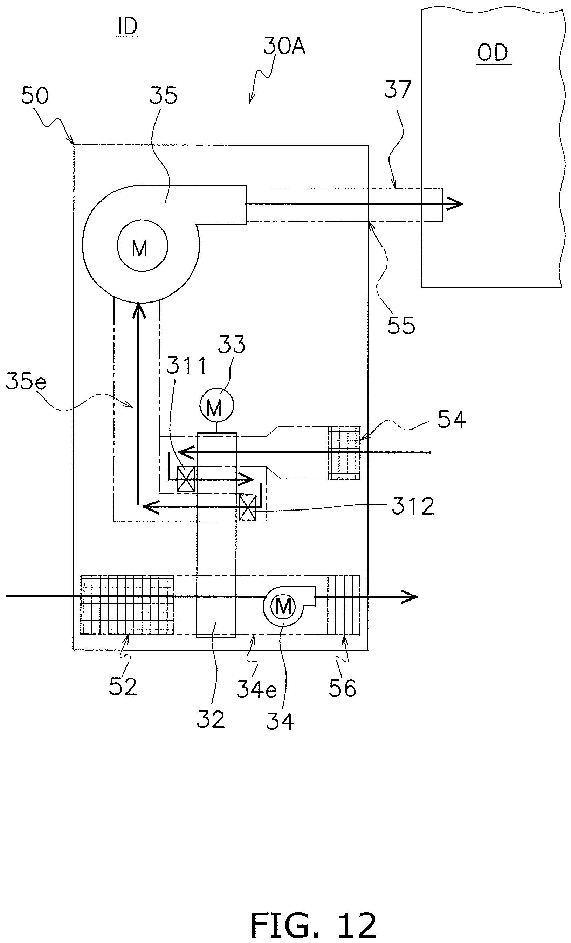

FIG. 11 shows the air conditioner 1 to which a dehumidifying unit 30A is attached. Further, FIG. 12 shows a concept of the configuration of the dehumidifying unit 30A shown in FIG. 11. The dehumidifying unit 30A described above is an example of the humidity control unit according to Modification 1A. The dehumidifying unit 30A according to Modification 1A includes, in the same manner as the humidifying unit 30 according to the embodiment, a regeneration heat exchanger 31, an adsorption rotor 32, a rotor motor 33, an adsorption fan 34, a regeneration fan 35, and a casing 50. Moreover, the regeneration heat exchanger 31 includes a first heat exchange unit 311 and a second heat exchange unit 312. However, the dehumidifying unit 30A according to Modification 1A includes an exhaust hose 37 instead of the humidifying hose 36 included in the humidifying unit 30 of the embodiment. Since the configuration of the dehumidifying unit 30A of Modification 1A is the same as that of the humidifying unit 30 of the embodiment except for the exhaust hose 37, the description is omitted.

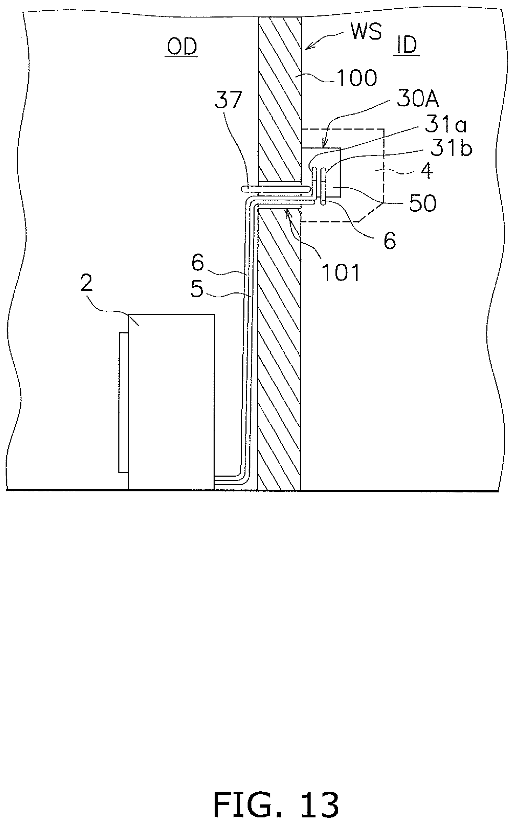

FIG. 13 shows how the casing 50 of the dehumidifying unit 30A is attached to the indoor space ID. From the dehumidifying unit 30A, the exhaust hose 37 extends to the outdoor space OD through a through hole 101. A connection pipe 6 laid from an outdoor unit 2 to the indoor space ID through the through hole 101 is connected to a pipe connection portion 31a of the dehumidifying unit 30A, and a connection pipe 5 laid from the outdoor unit 2 to the indoor space ID through the through hole 101 is connected to an indoor unit 4 (connecting pipe 72). The indoor unit 4 (connecting pipe 71) and a pipe connection portion 31b of the dehumidifying unit 30A are connected by the connection pipe 6 laid in the indoor space ID. The dehumidifying unit 30A is attached to a room different from the room in which the indoor unit 4 is installed, for example, and disposed in a drying room, for example.

When the dehumidifying unit 30A performs dehumidification, pre-adsorption air is taken in from the indoor space ID through a pre-adsorption air inlet 52, and sent to the adsorption rotor 32 by the adsorption fan 34. Then, post-adsorption air deprived of moisture and dried by the adsorption rotor 32 is blown into the indoor space ID from an adsorption fan blow-out port 56 by the adsorption fan 34. Further, the pre-regeneration air is taken in from the indoor space ID through a pre-regeneration air inlet 54, and sent to the adsorption rotor 32 by the regeneration fan 35. The post-regeneration air to which moisture has been given by the adsorption rotor 32 is blown into the outdoor space OD by the regeneration fan 35 through the exhaust hose 37.

In Modification 1A described above, a case where the indoor unit 4 and the dehumidifying unit 30A are used together has been described with reference to FIG. 11. However, the dehumidifying unit 30A and the outdoor unit 2 can be directly connected and used excluding the indoor unit 4. In this case, for example, the pipe connection portion 31b of the dehumidifying unit 30A in FIG. 11 is directly connected to a shutoff valve 25 of the outdoor unit 2.

### (5-2) Modification 1B

In the embodiment, the humidifying unit 30 installed in the outdoor space OD has been described. Through provision of a damper that switches between intake and exhaust of the adsorption fan 34 and the regeneration fan 35, a dehumidifying and humidifying unit having both a humidifying function and a dehumidifying function can be configured.

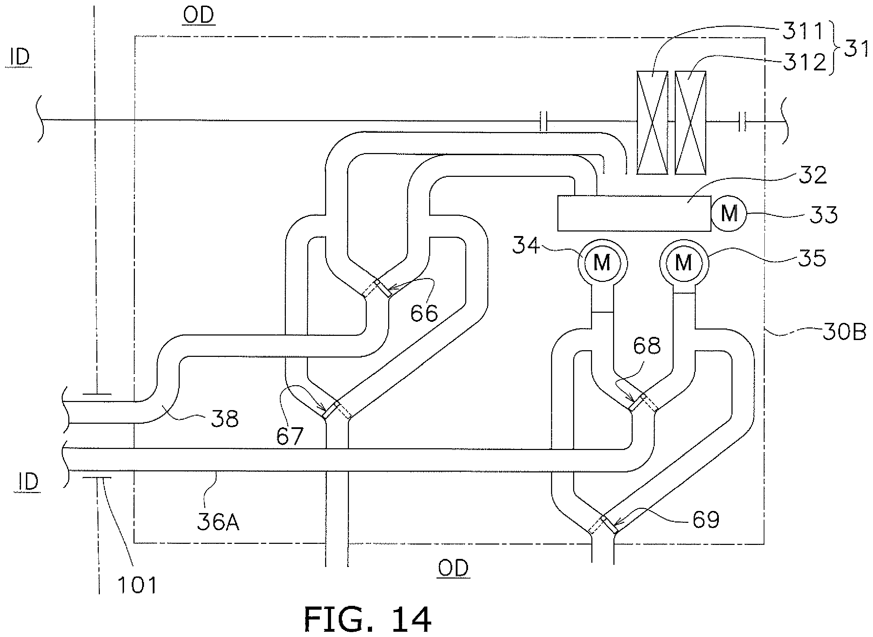

FIG. 14 shows a humidity control unit 30B that has both a humidifying function and a dehumidifying function. The humidity control unit 30B further includes four dampers 66 to 69 in addition to the configuration of the humidifying unit 30. The dampers 66 and 67 switch so that one of the pre-adsorption air and the pre-regeneration air is taken in from the indoor space ID, and the other is taken in from the outdoor space OD. The dampers 68 and 69 switch so that one of the post-adsorption air blown by the adsorption fan 34 and the post-regeneration air blown by the regeneration fan 35 is blown into the indoor space ID, and the other is blown into the outdoor space OD.

When the dampers 66 and 67 are in the state shown by the solid lines in FIG. 14, the pre-adsorption air is taken in from the outdoor space OD and sent to the adsorption rotor 32 by the adsorption fan 34, and the pre-regeneration air is taken in from the indoor space ID through an air supply hose 38 and sent to the adsorption rotor 32 by the regeneration fan 35. When the dampers 68 and 69 are in the state shown by the solid lines in FIG. 14, the post-adsorption air is blown into the outdoor space OD by the adsorption fan 34, and the post-regeneration air is blown into the indoor space ID through a humidity control hose 36A by the regeneration fan 35 so as to humidify the indoor space ID.

On the other hand, when the dampers 66 and 67 are in the state shown by the broken lines in FIG. 14, the pre-adsorption air is taken in from the indoor space ID through an air supply hose 38, and sent to the adsorption rotor 32 by the adsorption fan 34, and the pre-regeneration air is taken in from the outdoor space OD and sent to the adsorption rotor 32 by the regeneration fan 35. When the dampers 68 and 69 are in the state shown by the broken lines in FIG. 14, the post-adsorption air is blown into the indoor space ID through the humidity control hose 36A by the adsorption fan 34, and the post-regeneration air is blown into the outdoor space OD by the regeneration fan 35 so as to dehumidify the indoor space ID. For example, the dampers 66 to 69 may be configured with shutters or may be provided outside the casing.

Alternatively, the humidity control unit 30B can be disposed in the indoor space ID so as to have both humidifying and dehumidifying functions.

### (5-3) Modification 1C

In the above embodiment, the first heat exchange unit 311 and the second heat exchange unit 312 are disposed so that the air flow that passes through the adsorption rotor 32 in the moisture adsorption area AR1 is opposed to the air flow that passes through the second desorption area AR2c. Alternatively, the first heat exchange unit 311 and the second heat exchange unit 312 may be disposed so that the air flow that passes through the adsorption rotor 32 in the moisture adsorption area AR1 and the air flow that passes through the second desorption area AR2c flow in the same direction.

While embodiments have been described above, it will be understood that various changes in form and details can be made without departing from the scope of the present invention as set forth in the claims.

### REFERENCE SIGNS LIST

- 1: Air conditioner
- 2: Outdoor unit
- 4: Indoor unit
- 30: Humidifying unit (example of humidity control unit)
- 30A: Dehumidifying unit (example of humidity control unit)
- 30B: Humidity control unit
- 31: Regeneration heat exchanger
- 311: First heat exchange unit
- 312: Second heat exchange unit
- 32: Adsorption rotor
- 34: Adsorption fan
- 35: Regeneration fan
- 50: Casing
- 54: Pre-regeneration air inlet
- 55: Post-regeneration air outlet
- 400: Adsorber
- 500: Heating apparatus
- 510: First heating unit
- 520: Second heating unit
- AR2a: Purge area
- AR2b: First desorption area
- AR2c: Second desorption area

### CITATION LIST

### PATENT LITERATURE

[Patent Literature 1] JP 2007-327712 A

## Claims

1. A humidity control unit comprising:
a casing (50) that includes an air inlet (54) that takes in air, an air outlet (55) that takes out the air, a first desorption area (AR2b), and a second desorption area (AR2c), and is configured such that the air taken in from the air inlet passes through the first desorption area and the second desorption area in order and taken out from the air outlet;
an adsorber (400) that includes
an adsorbent capable of adsorbing moisture in the air and desorbing moisture to the air that has a higher temperature than a temperature of the air when moisture is adsorbed, and is configured to be capable of moving a portion of the adsorbent that has adsorbed moisture in the air to the first desorption area and the second desorption area, and
an adsorption rotor (32) that includes the adsorbent, and is configured to be capable of moving the portion of the adsorbent that has adsorbed moisture in the air to the first desorption area and the second desorption area; and
a heating apparatus (500) that includes
a first heating unit (510) that heats the air before passing through the first desorption area, and
a second heating unit (520) that heats the air before passing through the second desorption area,
wherein:
the heating apparatus is a heat exchanger (31) that is configured to exchange heat between a refrigerant supplied from a heat source unit and the air, and that includes,
as the first heating unit, a first heat exchange unit (311) that exchanges heat between the air before passing through the first desorption area and the refrigerant, and
as the second heating unit, a second heat exchange unit (312) that exchanges heat between the air after passing through the first heat exchange unit and the first desorption area and before passing through the second desorption area and the refrigerant; and
the heat exchanger is configured such that the refrigerant flows from the first heat exchange unit to the second heat exchange unit,
**characterized in that**:
the second desorption area and the first desorption area are adjacent to each other; and
the adsorption rotor is configured to move through a moisture adsorption area (AR1), the second desorption area, and the first desorption area in this order, and adsorb the moisture in the air in the moisture adsorption area.

2. The humidity control unit according to claim 1, wherein
the heat exchanger (31) is configured such that the first heat exchange unit (311) and the second heat exchange unit (312) are disposed on both sides of the adsorption rotor (32) with the adsorption rotor interposed between the first heat exchange unit and the second heat exchange unit.

3. The humidity control unit according to claim 1 or 2, wherein
the heat exchanger (31) is disposed in such a manner that an air flow that passes through the second desorption area after passing through the second heat exchange unit (312) is opposed to an air flow that passes through the adsorption rotor (32) for adsorption of moisture.

4. The humidity control unit according to any one of claims 1 to 3, wherein
the heat exchanger (31) is configured such that the refrigerant in a superheat range flows through at least a part of the first heat exchange unit (311), and the refrigerant in a gas-liquid two-phase area flows through the second heat exchange unit (312).

5. The humidity control unit according to any one of claims 1 to 4, wherein
the adsorption rotor (32) includes a polymer adsorbent that has a function of performing adsorption and desorption, and
the heat exchanger (31) is configured to exchange heat in the first heat exchange unit (311) in such a manner that a temperature of the air after heat exchange is lower than 100°C.

6. The humidity control unit according to any one of claims 1 to 5, wherein
the adsorber (400) has a first side close to the air outlet (55) and a second side close to the air inlet (54), and
the casing (50) is configured such that the air that has entered from the air inlet passes through the adsorber from the second side to the first side, the air folded back after passing through the first side passes through the adsorber from the first side to the second side, the air folded back after passing through the second side passes through the adsorber from the second side to the first side, and the air that has passed through the first side exits from the air outlet.

7. The humidity control unit according to claim 6, wherein
the heating apparatus (500) is configured such that the first heating unit (510) and the second heating unit (520) are disposed on both sides of the adsorption rotor (32) with the adsorber (400) interposed between the first heating unit and the second heating unit, and
the first heating unit, the first side, the second side, and the second heating unit are disposed in that order.

8. The humidity control unit according to claim 7, wherein
the heating apparatus (500) is disposed in such a manner that the air flow that passes through the adsorbent in the second desorption area after passing through the second heating unit (520) is opposed to the air flow that passes through the adsorbent for adsorption of moisture.

## Patentansprüche

1. Feuchtigkeitsregeleinheit, die aufweist:
ein Gehäuse (50), das einen Lufteinlass (54), der Luft ansaugt, einen Luftauslass (55), der die Luft ablässt, einen ersten Desorptionsbereich (AR2b) und einen zweiten Desorptionsbereich (AR2c) enthält und so konfiguriert ist, dass die vom Lufteinlass angesaugte Luft der Reihe nach durch den ersten Desorptionsbereich und den zweiten Desorptionsbereich strömt und aus dem Luftauslass abgelassen wird;
einen Adsorber (400), der aufweist:
ein Adsorptionsmittel, das zum Adsorbieren von Feuchtigkeit in der Luft und zum Desorbieren von Feuchtigkeit an die Luft imstande ist, die eine höhere Temperatur als eine Temperatur der Luft aufweist, bei der Feuchtigkeit adsorbiert wird, und so konfiguriert ist, dass er imstande ist, einen Teil des Adsorptionsmittels, das Feuchtigkeit in der Luft adsorbiert hat, zum ersten Desorptionsbereich und zum zweiten Desorptionsbereich zu bewegen, und
einen Adsorptionsrotor (32), der das Adsorptionsmittel enthält und so konfiguriert ist, dass er imstande ist, den Teil des Adsorptionsmittels, das Feuchtigkeit in der Luft adsorbiert hat, zum ersten Desorptionsbereich und zum zweiten Desorptionsbereich zu bewegen; und
eine Heizvorrichtung (500), die aufweist:
eine erste Heizeinheit (510), die die Luft erwärmt, bevor sie durch den ersten Desorptionsbereich strömt, und
eine zweite Heizeinheit (520), die die Luft erwärmt,
bevor sie durch den zweiten Desorptionsbereich strömt, wobei:
die Heizvorrichtung ein Wärmetauscher (31) ist, der so konfiguriert ist, dass er Wärme zwischen einem von einer Wärmequelleneinheit zugeführten Kältemittel und der Luft austauscht, und der aufweist:
als erste Heizeinheit, eine erste Wärmetauscheinheit (311), die Wärme zwischen der Luft, bevor sie durch den ersten Desorptionsbereich strömt, und dem Kältemittel tauscht, und
als zweite Heizeinheit, eine zweite Wärmetauscheinheit (312), die Wärme zwischen der Luft tauscht, nachdem sie durch die erste Wärmetauscheinheit und den ersten Desorptionsbereich geströmt ist und bevor sie durch den zweiten Desorptionsbereich und das Kältemittel passiert strömt; und
der Wärmetauscher so konfiguriert ist, dass das Kältemittel von der ersten Wärmetauscheinheit zu der zweiten Wärmetauscheinheit fließt,
**dadurch gekennzeichnet, dass**:
der zweite Desorptionsbereich und der erste Desorptionsbereich zueinander benachbart sind; und
der Adsorptionsrotor konfiguriert ist, sich durch einen Feuchtigkeitsadsorptionsbereich (AR1), den zweiten Desorptionsbereich und den ersten Desorptionsbereich in dieser Reihenfolge zu bewegen und die Feuchtigkeit in der Luft im Feuchtigkeitsadsorptionsbereich zu adsorbieren.

2. Feuchtigkeitsregeleinheit nach Anspruch 1, wobei der Wärmetauscher (31) so konfiguriert ist, dass die erste Wärmetauscheinheit (311) und die zweite Wärmetauscheinheit (312) auf beiden Seiten des Adsorptionsrotors (32) angeordnet sind, wobei der Adsorptionsrotor zwischen der ersten Wärmetauscheinheit und der zweiten Wärmetauscheinheit angeordnet ist.

3. Feuchtigkeitsregeleinheit nach Anspruch 1 oder 2, wobei der Wärmetauscher (31) in einer solchen Weise angeordnet ist, dass ein Luftstrom, der durch den zweiten Desorptionsbereich strömt, nachdem er durch die zweite Wärmetauscheinheit (312) geströmt ist, einem Luftstrom entgegengesetzt ist, der durch den Adsorptionsrotor (32) zur Adsorption von Feuchtigkeit strömt.

4. Feuchtigkeitsregeleinheit nach einem der Ansprüche 1 bis 3, wobei
der Wärmetauscher (31) so konfiguriert ist, dass das Kältemittel in einem Überhitzungsbereich durch mindestens einen Teil der ersten Wärmetauscheinheit (311) strömt und das Kältemittel in einem zweiphasigen Gas-Flüssig-Bereich durch die zweite Wärmetauscheinheit (312) strömt.

5. Feuchtigkeitsregeleinheit nach einem der Ansprüche 1 bis 4, wobei
der Adsorptionsrotor (32) ein Polymeradsorptionsmittel enthält, das eine Funktion zur Durchführung von Adsorption und Desorption hat, und
der Wärmetauscher (31) konfiguriert ist, in einer solchen Weise Wärme in der ersten Wärmetauscheinheit (311) zu tauschen, dass eine Temperatur der Luft nach dem Wärmetausch niedriger als 100°C ist.

6. Feuchtigkeitsregeleinheit nach einem der Ansprüche 1 bis 5, wobei
der Adsorber (400) eine erste Seite nahe dem Luftauslass (55) und eine zweite Seite nahe dem Lufteinlass (54) aufweist, und das Gehäuse (50) so konfiguriert ist, dass die Luft, die durch den Lufteinlass eingetreten ist, von der zweiten Seite zu der ersten Seite durch den Adsorber strömt, die Luft, die zurückgeleitet wird, nachdem sie durch die erste Seite geströmt ist, durch den Adsorber von der ersten Seite zur zweiten Seite strömt, die Luft, die zurückgeleitet wird, nachdem sie durch die zweite Seite geströmt ist, durch den Adsorber von der zweiten Seite zur ersten Seite strömt, und die Luft, die durch die erste Seite geströmt ist, aus dem Luftauslass austritt.

7. Feuchtigkeitsregeleinheit nach Anspruch 6, wobei die Heizvorrichtung (500) so konfiguriert ist, dass die erste Heizeinheit (510) und die zweite Heizeinheit (520) auf beiden Seiten des Adsorptionsrotors (32) angeordnet sind, wobei der Adsorber (400) zwischen der ersten Heizeinheit und der zweiten Heizeinheit angeordnet ist, und die erste Heizeinheit, die erste Seite, die zweite Seite und die zweite Heizeinheit in dieser Reihenfolge angeordnet sind.

8. Feuchtigkeitsregeleinheit nach Anspruch 7, wobei die Heizvorrichtung (500) in einer solchen Weise angeordnet ist, dass der Luftstrom, der durch das Adsorptionsmittel im zweiten Desorptionsbereich strömt, nachdem er durch die zweite Heizeinheit (520) geströmt ist, dem Luftstrom entgegengesetzt ist, der durch das Adsorptionsmittel zur Adsorption von Feuchtigkeit strömt.

## Revendications

1. Unité de régulation d'humidité, comprenant :
un boîtier (50) présentant une entrée d'air (54) par où l'air est admis, une sortie d'air (55) par où l'air est évacué, une première zone de désorption (AR2b), et une deuxième zone de désorption (AR2c), et configuré de telle manière que l'air admis par l'entrée d'air traverse, dans cet ordre, la première zone de désorption et la deuxième zone de désorption et soit évacué par la sortie d'air ;
un adsorbeur (400) comprenant
un adsorbant capable d'adsorber l'humidité de l'air et de désorber l'humidité dans l'air ayant une température supérieure à la température de l'air quand l'humidité est adsorbée, et prévu pour être capable de déplacer une partie de l'adsorbant ayant adsorbé l'humidité dans l'air vers la première zone de désorption et la deuxième zone de désorption, et
un rotor d'adsorption (32) contenant l'adsorbant, et prévu pour être capable de déplacer la partie de l'adsorbant ayant adsorbé l'humidité dans l'air vers la première zone de désorption et la deuxième zone de désorption ; et
un dispositif de chauffage (500) comprenant une première unité de chauffage(510) chauffant l'air avant traversée de la première zone de désorption, et
une deuxième unité de chauffage (520) chauffant l'air avant traversée de la deuxième zone de désorption, où :
le dispositif de chauffage est un échangeur de chaleur (31) prévu pour un échange thermique entre un réfrigérant provenant d'une unité source de chaleur et l'air, et
comprenant,
en tant que première unité de chauffage, une première unité d'échange de chaleur (311) échangeant de la chaleur entre l'air avant traversée de la première zone de désorption et
le réfrigérant, et,
en tant que deuxième unité de chauffage, une deuxième unité d'échange de chaleur (312) échangeant de la chaleur entre l'air après traversée de la première unité d'échange de chaleur et la première zone de désorption et avant traversée de la deuxième zone de désorption et le réfrigérant ; et où
l'échangeur de chaleur est prévu de sorte que le réfrigérant s'écoule de la première unité d'échange de chaleur vers la deuxième unité d'échange de chaleur,
**caractérisée en ce que** :
la deuxième zone de désorption et la première zone de désorption sont contiguës ; et
le rotor d'adsorption est prévu pour se déplacer, dans cet ordre, au travers d'une zone d'adsorption d'humidité (AR1),
de la deuxième zone de désorption, et de la première zone de désorption, et adsorber l'humidité de l'air dans la zone d'adsorption d'humidité.

2. Unité de régulation d'humidité selon la revendication 1, où l'échangeur de chaleur (31) est prévu de sorte que la première unité d'échange de chaleur (311) et la deuxième unité d'échange de chaleur (312) sont disposées de part et d'autre du rotor d'adsorption (32), ledit rotor d'adsorption étant intercalé entre la première unité d'échange de chaleur et la deuxième unité d'échange de chaleur.

3. Unité de régulation d'humidité selon la revendication 1 ou la revendication 2, où
l'échangeur de chaleur (31) est disposé de telle manière qu'un flux d'air traversant la deuxième zone de désorption après traversée de la deuxième unité d'échange de chaleur (312) est opposé à un flux d'air traversant le rotor d'adsorption (32) pour l'adsorption de l'humidité.

4. Unité de régulation d'humidité selon l'une des revendications 1 à 3, où
l'échangeur de chaleur (31) est prévu de sorte que le réfrigérant dans une plage de surchauffe s'écoule par au moins une partie de la première unité d'échange de chaleur (311), et le réfrigérant dans une plage biphasée gaz-liquide s'écoule par la deuxième unité d'échange de chaleur (312) .

5. Unité de régulation d'humidité selon l'une des revendications 1 à 4, où
le rotor d'adsorption (32) comprend un adsorbant polymérique ayant une fonction d'adsorption et de désorption, et
l'échangeur de chaleur (31) est prévu pour échanger de la chaleur dans la première unité d'échange de chaleur (311) de sorte que la température de l'air est inférieure à 100 °C après l'échange de chaleur.

6. Unité de régulation d'humidité selon l'une des revendications 1 à 5, où
l'adsorbeur (400) a un premier côté à proximité de la sortie d'air (55) et un deuxième côté à proximité de l'entrée d'air (54), et
le boîtier (50) est prévu de sorte que l'air introduit par l'entrée d'air traverse l'adsorbeur du deuxième côté vers le premier côté, l'air refoulé après traversée du premier côté traverse l'adsorbeur du premier côté vers le deuxième côté, l'air refoulé après traversée du deuxième côté traverse l'adsorbeur du deuxième côté au premier côté, et l'air ayant traversé le premier côté est évacué par la sortie d'air.

7. Unité de régulation d'humidité selon la revendication 6, où le dispositif de chauffage (500) est prévu de sorte que la première unité de chauffage(510) et la deuxième unité de chauffage (520) sont disposées de part et d'autre du rotor d'adsorption (32), l'adsorbeur (400) étant intercalé entre la première unité de chauffage et la deuxième unité de chauffage, et
la première unité de chauffage, le premier côté, le deuxième côté et la deuxième unité de chauffage sont disposés dans cet ordre.

8. Unité de régulation d'humidité selon la revendication 7, où le dispositif de chauffage (500) est disposé de sorte que le flux d'air traversant l'adsorbant dans la deuxième zone de désorption après traversée de la deuxième unité de chauffage (520) est opposé au flux d'air traversant l'adsorbant pour adsorption de l'humidité.
